# EUROPEAN PATENT APPLICATION

(11) **EP 2 688 125 A2**
(43) Date of publication of application: **22.01.2014**
(21) Application number: 12757682.5
(22) Date of filing: 15.03.2012
(51) Int. Cl.: H01M 4/04, C04B 35/64, H01M 4/58

(54) **METHOD FOR CALCINING ELECTRODE MATERIALS USING A ROTARY KILN**

(30) Priority: 16.03.2011 KR 20110023225
(71) Applicant: Hanwha Chemical Corporation, Seoul 100-797 (KR)
(72) Inventor: SONG, Kyu Ho, Daejeon 302-120 (KR); HAN, Kee Do, Daejeon 305-759 (KR); SHIN, Young Ho, Daejeon 305-804 (KR)
(74) Representative: Tischner, Oliver
(86) International application number: PCT/KR2012/001872
(87) International publication number: WO 2012/124990

(57) **Abstract**

A method of calcining an electrode material using a rotary kiln comprising a heat treatment section which has a cylindrical kiln shell, a supply section for introducing a process material into the kiln shell, and a discharge section for discharging the process material from the kiln shell, wherein the method comprises: introducing particles of the electrode material into the upper part of the kiln shell; flowing a positive pressure gas through the inside of the kiln shell and calcining the electrode material particles while moving them from the upper part to the lower part of the kiln shell; and discharging the electrode material particles from the lower part of the kiln shell.

## Description

### [Technical Field]

The present invention relates to a method of calcining electrode materials using a rotary kiln.

### [Background Art]

The main components of a second battery include a cathode, an anode, an electrolyte, and a separator. In order to achieve high performance and long life of a second battery, the electrode material is required to have a highly stable crystal structure, good electrical conductivity, and high stability to chemical reactions. Calcination is a process carried out to improve the performance of an electrode material. In the case of a cathode material, calcination improves crystallinity and adherence between crystals. Without calcination, unfavorable phenomena occur, e.g., crystals are not stable and unstable surfaces collapse, which causes a serious deterioration in the initial charge and discharge capacities of secondary batteries. Also, without calcination, an electrode material will undesirably have a large specific surface area, low tap density, and, as a result, low capacity per volume.

An apparatus widely used to calcine electrode materials is a roller hearth kiln. Calcination using a roller hearth kiln is performed by putting an electrode material into a saggar and moving the saggar very slowly into a long tunnel-type kiln maintained at a high temperature. Such a roller hearth kiln not only requires a high energy cost to maintain the constant temperature of a very long kiln but also requires a very large amount of nitrogen supplied into the kiln to create an inert atmosphere. To resolve the drawbacks of roller hearth kilns, rotary kilns are considered for the calcination of electrode materials.

Examples of the rotary kilns are disclosed in Japanese Patent Application Publication Nos. 2005-344994 and 2006-003027.

JP-A-2005-344994 discloses a rotary kiln comprising a shell which houses a material to be treated and rotates around an axis and a heating furnace which heats the outside of the shell. Here, the cross section of the heating area of the shell has an oval shape, and the oval shape has a long diameter to short diameter ratio of 1 to 2.5: 1. Further, the heating furnace has heaters on its inner periphery, and the heating furnace is displaced in such a way that it can be inclined upwards and downwards integrally with the shell.

JP-A-2006-003027 discloses a rotary kiln of an external heating type, which comprises a furnace body in a heating chamber; and a retort which rotates around an axis and has plural exhaust pipes, which pass through the furnace body longitudinally and the surrounding wall and communicate with the heating chamber. On the hearth, there are: a fly ash collecting member, which has a funnel shape and is open to the inside of the heating chamber and its diameter decreases downwards; a fly ash discharge passage, which communicates with the fly ash collecting member and is open to the outside of the furnace body; and an open-and-close unit, which opens or closes the fly ash discharge passage.

A rotary kiln comprises a supply section for feeding a process material into a kiln shell (retort), a heat treatment section having the kiln shell for performing calcination, and a discharge section for discharging a calcined material. Here, the inclination of the kiln shell is changed to control the moving speed of the process material in the kiln shell.

In the case of a roller hearth kiln, an electrode material to be treated is placed in a saggar and the saggar is moved into the kiln. In contrast, in the case of a rotary kiln, because an electrode material is fluidized through mixing and blending movements of a rotating kiln shell, calcination can be performed in a short time, and thus energy cost greatly decreases. Furthermore, the amount of nitrogen introduced to create an inert atmosphere is also greatly reduced because the inner space of the kiln shell is relatively small in a rotary kiln. However, a rotary kiln has a disadvantage in that it produces more fine dust than a roller hearth kiln because the former mixes the process material to be treated by the rotation of the kiln shell. If fine dust is contained in a large amount in an electrode material, the fine dust flies in the process of preparing an electrode, worsening the handling properties, increasing the specific surface area of the electrode material, and lowering the tap density, thereby leading to a lowered capacity per volume of the electrode material. Accordingly, it is necessary to suppress the production of fine dust in calcining an electrode material using a rotary kiln.

If calcination temperature is too low or calcination time is too short in a rotary kiln, sintering of the electrode material occurs insufficiently, causing low crystallinity, high specific surface area, and low tap density of an electrode. On the other hand, if calcination temperature is too high or calcination time is too long, excessive sintering occurs which brings about drawbacks such as phase decomposition, and increased process cost. Although calcination atmosphere is not particularly limited, an inert or reduction atmosphere is preferable to prevent oxidation of the electrode material. Meanwhile, in order to increase the performance of a second battery, many factors should be considered such as: corrosion resistance to the electrolyte; the shape of the electrode material particles which affects the life span and electrical properties of a battery; and particle size and distribution which influences the easiness of electrode preparation. Particularly, since the electrode material is a core element which determines the performance of the second battery, many efforts have been made for improving electrode materials in their physicochemical properties such as corrosion resistance and dispersibility, and electrical properties such as electrical conductivity.

Examples of such efforts are the nanotization of electrode material particles, incorporation of different elements into a solid solution, formation of a protection film on particle surface, and forming secondary particles by aggregating nanometer-sized primary particles. Further, the surface of electrode material particles has been coated with a carbon-based material or a ceramic material, which has excellent corrosion resistance and chemical resistance and improves the electrical conductivity of the electrode material.

Since carbon has merits such as high electron conductivity and chemical stability, it may be coated onto or mixed with a cathode material to protect the cathode material and to improve the functions of the cathode material having low conductivity. The merits of carbon are better realized if carbon is coated on the surfaces of electrode material particles using chemical vapor deposition than when it is simply mixed with the electrode material through mechanical mixing. The merits of carbon include the improvement of the electrical conductivity of an electrode material, the protection of electrode material particles from external physicochemical influences, and the prevention of excessive growth of electrode material particles during heat treatment. A general method of carbon coating comprises coating a carbon precursor onto electrode material particles, and heat-treating the carbon precursor under an inert atmosphere for carbonization. Crystallinity, electrical conductivity, and mechanical strength of the carbide formed vary according to the type of carbon precursor, and the atmosphere and temperature of the carbonization reaction. In order to achieve high crystallinity of carbide and to achieve complete carbonization by entirely emitting hydrogen, oxygen, hydrocarbons and impure elements through pyrolysis, carbonization is preferably performed at a high temperature which does not allow the phase transition or pyrolysis of the electrode material. It is not preferable if there exists a large amount of fine carbon dust that does not adhere to the electrode material in the process of coating the carbon onto the electrode material, because the dust increases the specific surface area of the treated material and lowers tap density, thereby causing low capacity per volume of the electrode material. Therefore, fine carbon dust should be suppressed when a carbon-containing electrode material is calcined by a rotary kiln.

In general, the shell of a rotary kiln may be formed of a metallic material in consideration of mechanical strength and other properties at high temperatures. However, when an electrode material is calcined in a rotary kiln, metal components generated due to the etching of the kiln shell which is formed of a metallic material may contaminate the electrode material. Such alien substances as metallic material contained in the electrode material deteriorate the electrochemical properties and safety of a battery, shorten the cycle life of the battery, and eventually decrease the productivity, reliability, and cost effectiveness of the battery.

### [Prior Art]

### [Patent Documents]

Japanese Patent Application Publication No. 2005-344994
Japanese Patent Application Publication No. 2006-003027

### [Disclosure]

### [Technical Problem]

The present invention provides an improved method of calcining an electrode material.

### [Technical Solution]

The present invention provides a method of calcining an electrode material using a rotary kiln comprising a heat treatment section which has a cylindrical kiln shell, a supply section for introducing a process material into the kiln shell, and a discharge section for discharging the process material from the kiln shell, wherein the method comprises: introducing particles of the electrode material into the upper part of the kiln shell; flowing a positive pressure gas through the inside of the kiln shell and calcining the electrode material particles while moving them from the upper part to the lower part of the kiln shell; and discharging the electrode material particles from the lower part of the kiln shell.

### [Advantageous Effects]

If an electrode material is calcined according to the present invention, metallic impurities are prohibited from being included in the electrode material, and the stability of the electrode material to chemical reactions with an electrolyte increases, thereby the cycle life of a battery is prolonged.

Further, moisture and fine dust of the electrode material or carbon are removed from the electrode material during calcinations. Thus, adhesion increases between a current collector and an electrode made of the electrode material, the increase of specific surface area of the electrode material is suppressed, and tap density of the electrode material increases, thus capacity per volume of the electrode material increases.

In addition, if a gaseous carbon compound is included in the positive pressure gas, the surface of the electrode material on which carbon is incompletely coated is improved. Thus, the electrical conductivity of the electrode material increases, and stability to chemical reactions with an electrolyte increases, thereby the performance of a secondary battery is improved and the prolonged cycle life of a battery is possible.

The present invention is particularly suitable for calcining electrode materials of lithium secondary batteries.

### [Description of Drawings]

FIG. 1 is a schematic cross-sectional view illustrating an example of a rotary kiln used in a method of calcining electrode material according to the present invention.
FIG. 2 shows the particle size distribution of the electrode material that was calcined by injecting nitrogen as a positive pressure gas at a rate of 0.86 m³/min in Example 1.
FIG. 3 shows the particle size distribution of the electrode material that was calcined by injecting nitrogen as a positive pressure gas at a rate of 0.1 m³/min in Example 2.
FIG. 4 shows the charge-discharge performance of the electrode material that was calcined using nitrogen only as a positive pressure gas in Example 1.
FIG. 5 shows the charge-discharge performance of the electrode material that was calcined using a mixture of butane and nitrogen as a positive pressure gas in Example 3.
FIG. 6a shows the charge-discharge performance of the electrode material that was calcined at 350 °C in Example 4.
FIG. 6b shows the charge-discharge performance of the electrode material that was calcined at 1,050 °C in Example 5.
FIG. 7a is an SEM photograph of the electrode material having a residence time of 0.25 hr in the kiln shell in Example 6.
FIG. 7b is an SEM photograph of the electrode material having a retention time of 1.0 hr in the kiln shell in Example 1.
FIG. 7c is an SEM photograph of the electrode material having a retention time of 10 hrs in the kiln shell in Example 7.
FIG. 8a is an XRD pattern of the electrode material that was calcined in the kiln shell having an oxygen concentration of 50 ppm in Example 1.
FIG. 8b is an XRD pattern of the electrode material that was calcined in the kiln shell having an oxygen concentration of 1,000 ppm in Example 8.

### [Mode for Invention]

An aspect of the present invention provides a method of calcining an electrode material using a rotary kiln comprising a heat treatment section which has a cylindrical kiln shell, a supply section for introducing a process material into the kiln shell, and a discharge section for discharging the process material from the kiln shell, wherein the method comprises: introducing particles of the electrode material into the upper part of the kiln shell; flowing a positive pressure gas through the inside of the kiln shell and calcining the electrode material particles while moving them from the upper part to the lower part of the kiln shell; and discharging the electrode material particles from the lower part of the kiln shell. The electrode material particles discharged from the lower part are cooled while they pass through a cooler.

The method of feeding a process material to be treated into a rotary kiln is not particularly limited. The feeding method may vary according to the angle of repose of the process material. If the angle of repose is large, the process material will not be smoothly fed into the kiln shell at the supply section due to a bridge phenomenon between the process material and the feeding device. Although there are no particular limitations on the types of the feeding devices, examples thereof are a screw type, a vibration type, a push type, and a pneumatic conveying type.

Calcination temperature in the kiln is preferably 400 to 1,000 °C. If calcination temperature is too low, the calcination of the electrode material may not sufficiently occur, lowering crystallinity and adhesion between crystals, increasing the specific surface area of the electrode material, thereby bringing about a low tap density of the electrode. On the other hand, if calcination temperature is too high, excessive calcination occurs, which increases the agglomeration of particles, causes the phase decomposition of the electrode material, reduces carbon content through carbon decomposition thus worsening electrochemical properties, and causes such problems as decreased durability of the kiln shell which increases process cost. More preferably, calcination temperature is 600 to 850 °C.

The retention time (i.e., calcination time) of a process material in a kiln shell is preferably 0.5 to 6 hours. If calcination time is too short, the electrode material will be insufficiently calcined and the contact time between the electrode material and the positive pressure gas will be short, which decreases crystallinity, increases the content of moisture and material not reacted, and lowers the tap density of an electrode and adhesion between the electrode and the current collector when the electrode material is used. If calcination time is too long, excessive calcination occurs, which increases the growth and aggregation of particles, thereby worsening the electrochemical properties and necessitating a long kiln shell which increases facility cost. The retention time of a process material in a kiln shell is more preferably 0.5 to 2 hours.

A kiln shell is installed inclined for calcining a process material while transferring the process material from the upper part (top side) of the kiln shell to the lower part (bottom side). Further, a gas of positive pressure (i.e., a pressure higher than the atmospheric pressure) is supplied into the kiln shell. Preferably, the positive pressure gas has a pressure 0.01 to 1 kPa higher than the atmospheric pressure in the kiln shell. If the pressure in the kiln shell is lower than the atmospheric pressure, external air comprising impurities such as moisture and oxygen may flow into the kiln shell. If a material that has been calcined under an environment having a high moisture content is used as an electrode material, adhesion between an electrode and a current collector is low. Furthermore, oxygen worsens electrochemical properties by oxidizing the electrode material, and worsens the durability of the kiln shell by oxidizing it. On the other hand, if the pressure in the kiln shell is too high, there are problems that fine electrode-material dust, fine carbon dust, and other fine dusts occur more, and the concentration of moisture increases in the kiln shell.

The positive pressure gas supplied to the kiln shell may be exhausted through a top positive-pressure-gas outlet formed on the top of the heat treatment section and through a bottom positive-pressure-gas outlet formed at the bottom of the heat treatment section. Here, with respect to the longitudinal center of the heat treatment section, the top of the heat treatment section means the upward part where the supply section for the process material exists, and the bottom of the heat treatment part means the downward part where the discharge section exists. If 50% or more of the total amount of the used positive pressure gas is exhausted through the top outlet of the positive pressure gas, it is advantageous in removing moisture, fine electrode-material dust, fine carbon dust, and other fine dusts present in the kiln shell.

It is preferable to flow the positive pressure gas upwards from the bottom side to the top side of the kiln shell. The positive pressure gas may be supplied to the bottom side of the kiln shell and exhausted from the top side of the kiln shell. Flowing the positive pressure gas in the direction opposite to the flow of the process material within the kiln shell is more advantageous in capturing and removing the fine electrode-material dust, fine carbon dust, and other fine dusts. The fine carbon dust may be that contained in the electrode material or may be that produced by the etching of the kiln shell made of a carbonic material.

The positive pressure gas may be one or more selected from the group consisting of nitrogen (N₂), carbon dioxide (CO₂), hydrogen (H₂), helium (He), neon (Ne), argon (Ar), krypton (Kr), xenon (Xe), and radon (Rn). A gaseous carbon compound may be mixed with the positive pressure gas. A gaseous carbon compound improves the surface of the electrode material which is incompletely coated with carbon. Further, a gaseous carbon compound prevents damage caused by the oxidation of the electrode material and kiln shell. Examples of gaseous carbon compounds are hydrocarbon-based gases such as methane, ethane, butane, and propane. A mixture of nitrogen and butane may be used as the positive pressure gas.

Preferably, the concentration of oxygen within the kiln shell is 200 ppm or less. Oxygen problematically oxidates the electrode material or kiln shell. More preferably, oxygen concentration in the kiln shell is 100 ppm or less.

The kiln shell may be made of metal, ceramic, or carbon. If the inner surface of the kiln shell is rubbed with electrode material particles during calcination, it may be worn out, producing fine dust which, as an impurity, may be mixed into the electrode material. Accordingly, in order to prevent such mixing with impurities, it is preferable to use carbon to form the inner surface of the kiln shell which contacts electrode materials.

The electrode material may be a cathode material or an anode material. Carbon may be included in the electrode material by being mixed with or by being coated onto the electrode material.

The electrode material may be a transition metal compound. Such transition metal compounds are classified into spinel structure, layered structure, and olivine structure according to their crystal structures.

An example of the spinel structure is LiMn₂O₄. Examples of the layered structure are LiCoO₂, Li(Ni_{1-x-y}CoₓAl_{y})O₂, Li(Ni_{1-xy}MnₓCo_{y})O₂, and Li_{2-z}(Fe_{1-x-y}MnₓM_{y})_{z}O₂ (M=Ti, Ni, Zn, Mn, and others). Examples of the olivine structure are LiFePO₄ and LiMPO₄ (M=Fe, Mn, Ni, Co, or mixtures thereof).

Further, the electrode material may be an anion-deficient lithium transition metal phosphate having the olivine structure represented by the following chemical formula 1.

[Formula 1] Li₁₋ₓM(PO₄)_{1-y}

wherein 0≤x≤0.15, 0<y≤0.1, and M is represented by the following chemical formula 2.

[Formula 2] M^{A}ₐM^{B}_{b}M^{T}ₜFe_{1-(a+b+t)}

wherein M^{A} is one or more elements selected from the group consisting of the Group 2 elements of the periodic table, M^{B} is one or more elements selected from the group consisting of the Group 13 elements of the periodic table, M^{T} is one or more elements selected from the group consisting of Sc, Ti, V, Cr, Mn, Co, Ni, Cu, Zn, Y, Zr, Nb, and Mo, and wherein 0≤a≤1, 0≤b<0.575, 0≤t≤1, 0≤(a+b)<1, and 0<(a+b+t)≤1.

Preferably, M^{A} may be one or more elements selected from the group consisting of Mg and Ca; M^{B} may be one or more elements selected from the group consisting of B, Al and Ga; and M^{T} may be one or more elements selected from the group consisting of Ti, V, Cr, Mn, Co, Ni, Cu, Zn, Zr, Nb, and Mo. More preferably, M^{A} is Mg; M^{B} is Al; and M^{T} is one or more elements selected from the group consisting of Mn, Co, and Ni.

Examples of a method and an apparatus of calcining an electrode material according to the present invention are described by referring to the attached drawings.

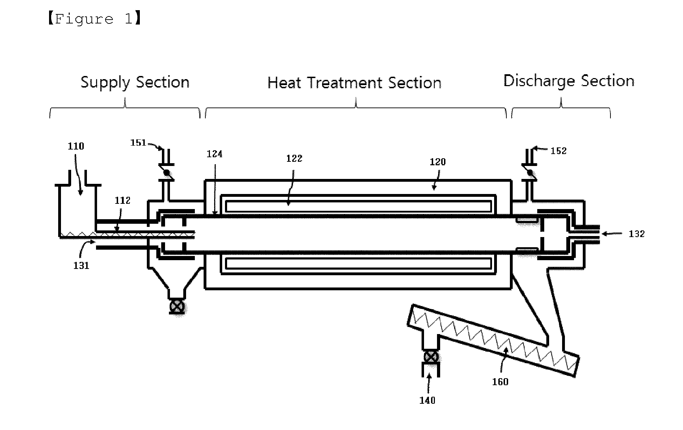

The rotary kiln illustrated in FIG. 1 comprises a heat treatment section having a cylindrical kiln shell 124, a supply section for feeding a process material into the kiln shell 124, and a discharge section for discharging the treated process material from the kiln shell 124.

The electrode material, which is a process material to be treated, is injected into a hopper 110 installed in the supply section and transferred to the heat treatment section through a process material transfer equipment 112.

The electrode material introduced into the hopper 110 may be primary particles having an average size of 0.01 to 5 *µ*m, or agglomerates of primary particles. Such agglomerates may have an average size of 1 to 50 *µ*m.

Further, a reducing agent may be mixed with the process material introduced into the hopper 110. The reducing agent may be injected into the kiln shell 124. Examples of the reducing agents are hydrazine, sodium hypophosphite, sodium sulfite, sodium nitrite, potassium iodide, sugar, caramel, fructose, oxalic acid, ascorbic acid, hydrogen, carbon, and hydrocarbons.

The heat treatment section is heated by a heating device 122, and the electrode material is calcined in the kiln shell 124 such that the calcined electrode material is discharged through a process material outlet 140.

The kiln shell 124 has a cylindrical shape, and its inner surface brought into contact with the process material may be made of carbon. Although the wall of the kiln shell 124 may be entirely made of carbon, the body of the kiln may be made of metal or ceramic, and only the inner surface of the kiln may be coated with carbon. The kiln shell 124 is fixed onto a base (which is not illustrated in the drawing) so that the kiln shell is rotatably supported by plural supporting elements (which are not illustrated in the drawing), and is rotated by a driving device (which is not illustrated in the drawing) on the base. The kiln shell 124 is installed so that its axis of rotation is inclined, and the kiln shell calcines a process material while transferring the process material from its upper part (the top side) to its lower part (the bottom side).

The heating device 122 of the heat treatment section is thermally insulated by a sealed insulation case 120 to minimize heat loss. The kiln shell 124 is heated to a temperature of 400 to 1,000 °C.

For the removal of fine dust produced by wear of the kiln shell 124, fine carbon dust contained in the electrode material, or fine electrode-material dust, a positive pressure gas having a pressure higher than the atmospheric pressure is introduced through a top positive-pressure-gas inlet 131 at the top of the heat treatment section or through a bottom positive-pressure-gas outlet 152 at the bottom of the heat treatment section. The pressure of the positive pressure gas may be controlled by a positive pressure control damper (not illustrated in the drawing).

The positive pressure gas in the kiln shell 124 captures moisture and fine dust produced from the calcination process and discharges the collected moisture and fine dust through a top positive-pressure-gas outlet 151 at the top of the heat treatment section or a bottom positive-pressure-gas outlet 152 in the bottom of the heat treatment section.

Particles of the electrode material may comprise 0 to 30% by weight of moisture. In order to effectively remove the moisture contained in the particles of the electrode material, the kiln shell is slanted at an angle of 1 to 15 degrees and rotated at 0.1 to 5 revolutions per minute. Such operational conditions increase the fluidity and scattering properties of the particles at the supply section of the electrode material particles, which increases contact between moisture and the positive pressure gas, wherein the positive pressure gas collects moisture in the kiln shell and discharges it.

Although the present invention has been described above by referring to FIG. 1, the present invention is not limited to a rotary kiln of the specific structure illustrated in FIG. 1.

### [Example 1]

Lithium iron phosphate (LiFePO₄) as an electrode material was calcined using the rotary kiln illustrated in FIG. 1. Lithium iron phosphate containing 4.2% by weight of moisture and 3.6% by weight of carbon was introduced into the kiln at a rate of 5 kg/hr. The kiln shell made of a carbonic material was heated to 700 °C, and the electrode material was allowed to stay within the kiln shell for 1 hour for calcination. Nitrogen as a positive pressure gas was injected at a flow rate of 0.86 m³/min. The concentration of oxygen within the kiln shell was 50 ppm. The positive pressure gas within the kiln shell had a pressure of 0.3 kPa. All positive pressure gas was discharged through the top outlet 151.

The measurement of carbon content showed that the solid phase effluent discharged through the process material outlet 140 contained carbon at 2.0% by weight, and the solid phase effluent discharged through the top positive-pressure-gas outlet 151 contained carbon at 7.3% by weight.

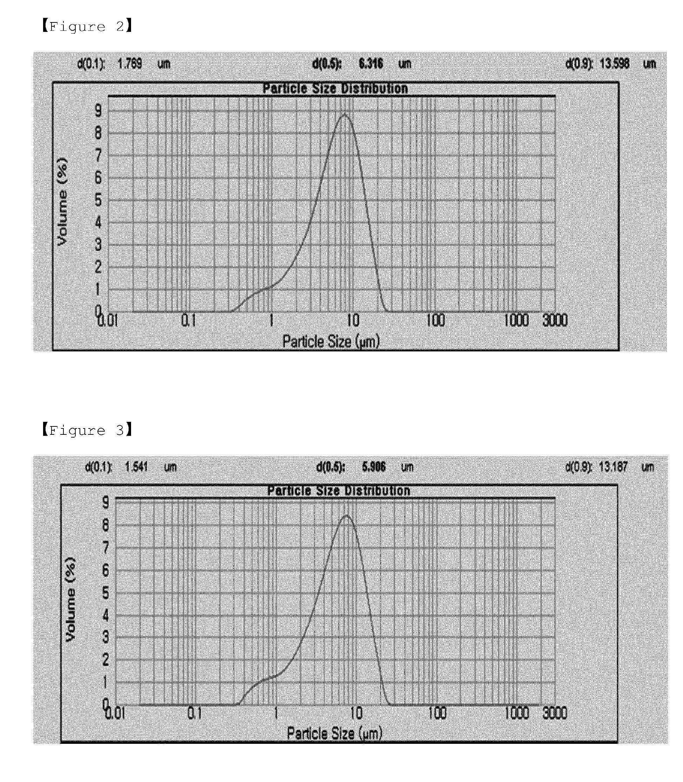

The measurement of particle distribution of the calcined material discharged through the process material outlet 140 showed that fine electrode-material dust and the fine carbon dust were removed, and the average particle size D₅₀ was 6.316 *µ*m, which is relatively large as illustrated in FIG. 2. Further, the process material calcined contained carbon at 2.0% by weight, had a tap density of 0.91 g/cc, and an electrode density of 2.15 g/cc.

### [Example 2] Changed flow rate of the positive pressure gas

The electrode material was calcined in the same method as in Example 1 except that nitrogen was injected as the positive pressure gas at a flow rate of 0.1 m³/min.

As illustrated in FIG. 3, the average particle size (D₅₀) of the calcined material was 5.906 *µ*m. The calcined material contained carbon at 2.87% by weight, had a tap density of 0.54 g/cc, and an electrode density of 1.91 g/cc.

### [Example 3] Change in the composition of the positive pressure gas

The electrode material was calcined in the same method as in Example 1 except that a mixed gas comprising butane and nitrogen at a volume ratio of 1:49(butane:nitrogen) was used as the positive pressure gas.

### [Example 4] Change in calcination temperature

The electrode material was calcined in the same method as in Example 1 except that calcination temperature in the kiln shell was 350 °C.

### [Example 5] Change in calcination temperature

The electrode material was calcined in the same method as in Example 1 except that calcination temperature in the kiln shell was 1,050 °C.

### [Example 6] Change in calcination time

The electrode material was calcined in the same method as in Example 1 except that the electrode material remained in the kiln shell for 0.25 hour.

### [Example 7] Change in calcination time

The electrode material was calcined in the same method as in Example 1 except that the electrode material remained in the kiln shell for 10 hours.

### [Example 8] Change in calcination time

The electrode material was calcined in the same method as in Example 1 except that the concentration of oxygen in the kiln shell was 1,000 ppm.

### [Example 9] Changed discharge position of the positive pressure gas

The electrode material was calcined in the same method as in Example 1 except that 75% of the positive pressure gas was discharged through the top positive-pressure-gas outlet 151, and the rest through the bottom positive-pressure-gas outlet 152.

### [Example 10] Changed discharge position of the positive pressure gas

The electrode material was calcined in the same method as in Example 1 except that 50% of the positive pressure gas was discharged through the top positive-pressure-gas outlet 151.

### [Example 11] Changed discharge position of the positive pressure gas

The electrode material was calcined in the same method as in Example 1 except that 25% of the positive pressure gas was discharged through the top positive-pressure-gas outlet 151.

### [Example 12] Changed discharge position of the positive pressure gas

The electrode material was calcined in the same method as in Example 1 except that all positive pressure gas was discharged through the bottom positive-pressure-gas outlet 152, and none of the positive pressure gas was discharged through the top positive-pressure-gas outlet 151.

### Evaluation of charge and discharge

A slurry was prepared by mixing the electrode materials that were calcined in Examples 1, 3, 4 and 5, Denka (produced by PTE Corporation, Singapore) as conductive material, and KF1300 (produced by Kureha Chemical Ind. Co., Ltd., Japan) as binder at a weight ratio of 90:5:5. The slurry was uniformly coated on an aluminum foil having a thickness of 20 *µ*m. The coated aluminum foil was dried at 130 °C to produce a cathode for a lithium secondary battery.

Coin batteries were manufactured by using the above-prepared cathode, an anode made of a lithium metal foil, and a separator. A liquid electrolyte wherein 1 M of LiPF₆ was dissolved in a solvent which was a mixture of ethylene carbonate, dimethylene carbonate, and diethyl carbonate at a ratio of 1:2:1.

With respect to the manufactured coin batteries, the electrical properties of the electrode materials were evaluated in a range of 2.0 to 4.4 V using the electrochemical analysis device Toscat 3100U (manufactured by Toyo System Corporation).

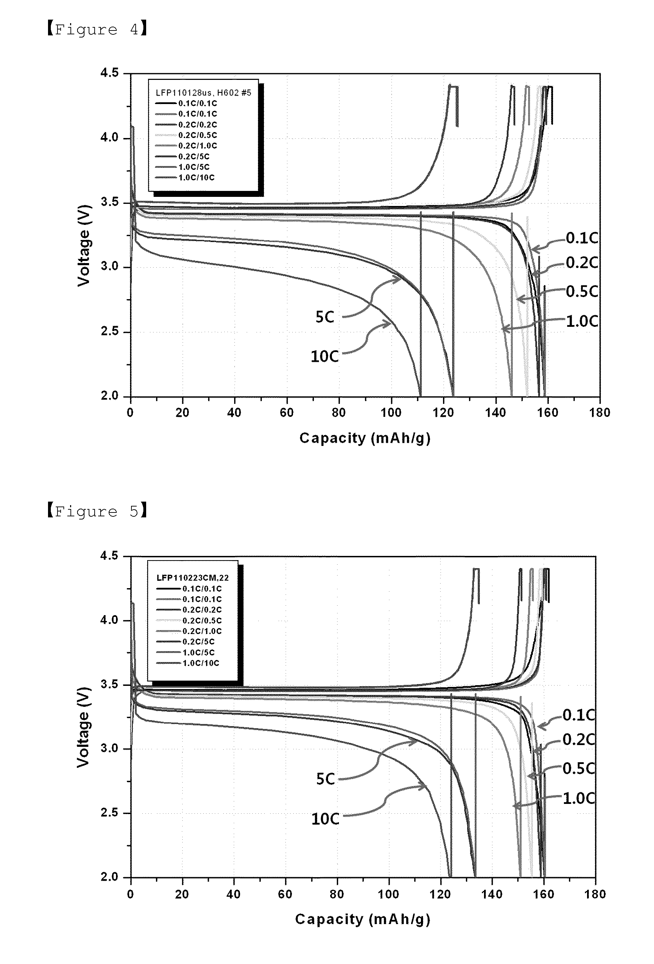

As illustrated in FIGS. 4 and 5, charge-discharge properties were greatly improved at high C-rates when a mixture of butane and nitrogen was used as the positive pressure gas, compared with when nitrogen only was used.

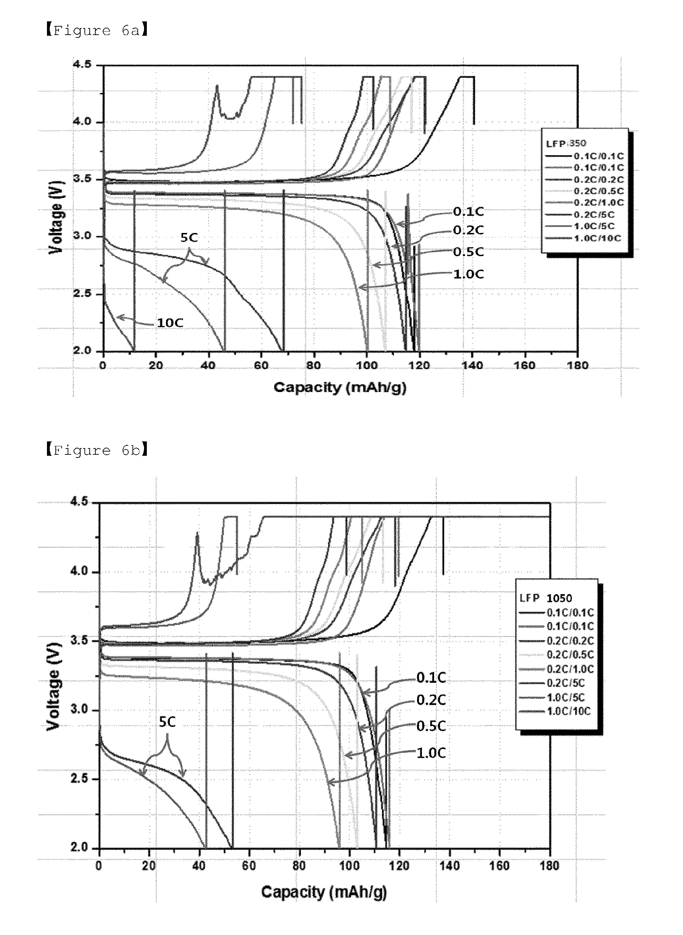

Further, as illustrated in FIGS. 4, 6a and 6b, charge-discharge properties were better when the electrode materials was calcined at 700 °C than at 350 to 1,050 °C.

### SEM analysis

Scanning electron microscope (SEM) was performed on the electrode materials calcined in Examples 1, 6 and 7. For analysis, the scanning electron microscope JSM-6300 (manufactured by JEOL Corporation) was used at conditions of an accelerating voltage of 10,000 volts, an emission current of 9,500 nA, and a working distance of 12,400 *µ*m.

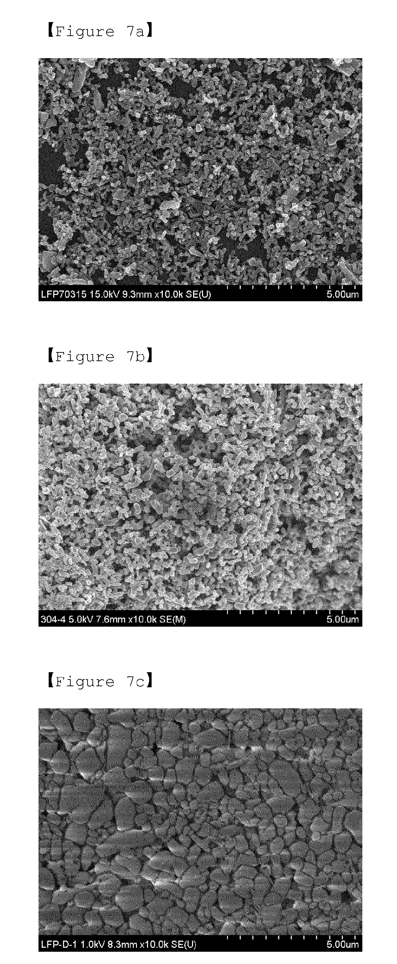

As illustrated in FIGS. 7a, 7b and 7c, if the retention of the electrode materials in the kiln was short, many pores were found between the particles in the granules, and if the retention was long, the agglomeration of particles progressed further.

### XRD analysis

X-ray diffraction (XRD) tests were conducted on electrode materials calcined in Examples 1 and 8. X-ray diffraction patterns were taken at room temperature using a Cu X-ray tube for a 2θ range of 10° ≤ 2θ ≤90° with 0.01° step size.

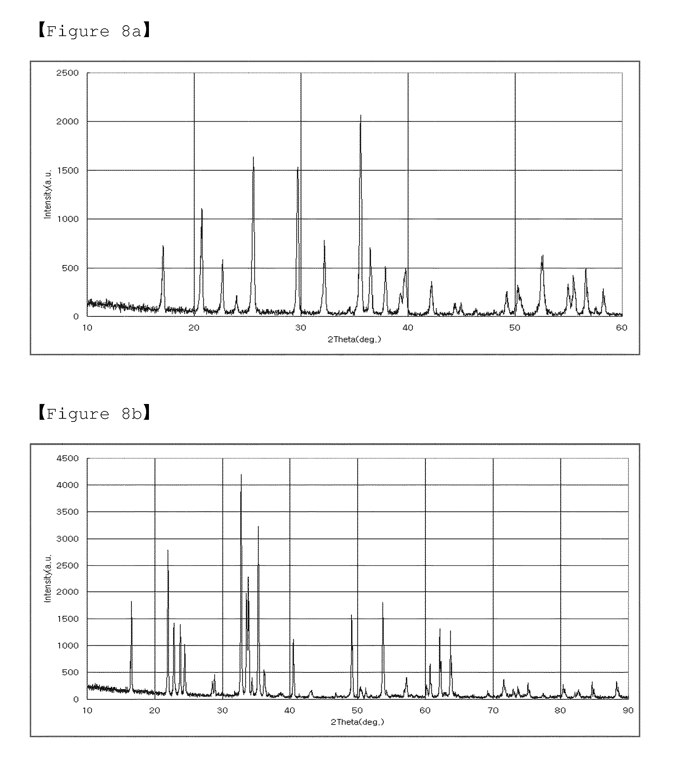

As illustrated in FIGS. 8a and 8b, if the concentration of oxygen in the kiln was high, the Fe in LiFePO₄ was oxidized from Fe²⁺ to Fe⁺³, producing Li₃Fe₂(PO₄)₃. The electrochemical properties of Li₃Fe₂(PO₄)₃ are inferior to those of LiFePO₄.

### Moisture and carbon contents

Moisture in the electrode materials calcined in Examples 1, 9, 10, 11 and 12 was measured using the moisture measuring instrument DL38 (manufactured by Mettler Toledo). Further, carbon content of the electrode materials was measured using the carbon content measuring instrument CS-800 (manufactured by ELTRA). The results are given in the following Table 1.

**[Table 1]**

| | Ex. 1 | Ex. 9 | Ex. 10 | Ex. 11 | Ex. 12 |
|---|---|---|---|---|---|
| Moisture (ppm) | 164 | 251 | 430 | 866 | 1,063 |
| Carbon (% by wt) | 2.0 | 2.2 | 2.5 | 2.8 | 3.1 |

As shown in Table 1, as the ratio of the positive pressure gas discharged through the top positive-pressure-gas outlet increases, the amounts of moisture and carbon present in the electrode materials decrease. If the ratio of the positive pressure gas discharged from the top outlet is 50% or higher, the content of moisture in the electrode materials is 500 ppm or less.

### [Industrial Applicability]

A method of calcining electrode material according to the present invention prevents impurities or fine dust from being contained in the process material and improves carbon coating on the electrode material. Thus, the present invention is suitable for preparing electrode material with high performance and high stability. The present invention is particularly suitable for calcining electrode materials of lithium secondary batteries.

### [Explanation of Reference Marks]

110: hopper for feeding process material, 112: transfer equipment for process material, 120: sealed insulation case, 122: heating device, 124: kiln shell, 131: top positive-pressure-gas inlet, 132: bottom positive-pressure-gas inlet, 140: process material outlet, 151: top positive-pressure-gas outlet, 152: bottom positive-pressure-gas outlet, 160: cooler

## Claims

1. A method of calcining an electrode material using a rotary kiln comprising a heat treatment section which has a cylindrical kiln shell, a supply section for introducing a process material into the kiln shell, and a discharge section for discharging the process material from the kiln shell, wherein the method comprises: introducing particles of the electrode material into the upper part of the kiln shell; flowing a positive pressure gas through the inside of the kiln shell and calcining the electrode material particles while moving them from the upper part to the lower part of the kiln shell; and discharging the electrode material particles from the lower part of the kiln shell.

2. The method of claim 1, wherein the electrode material is calcined at a temperature of 400 to 1,000 °C.

3. The method of claim 1, wherein the electrode material remains in the kiln shell for 0.5 to 6 hours.

4. The method of claim 1, wherein the positive pressure gas in the kiln shell has a pressure 0.01 to 1 kPa higher than the atmospheric pressure.

5. The method of claim 1, wherein the kiln shell has an oxygen concentration of 200 ppm or less.

6. The method of claim 1, wherein 50% or more of the positive pressure gas is discharged through a top positive-pressure-gas outlet formed on the top of the heat treatment section.

7. The method of claim 1, wherein the positive pressure gas supplied to the kiln shell comprises a gaseous carbon compound.

8. The method of claim 1, wherein the positive pressure gas supplied to the kiln shell is one or more selected from the group consisting of nitrogen (N₂), carbon dioxide (CO₂), hydrogen (H₂), helium (He), neon (Ne), argon (Ar), krypton (Kr), xenon (Xe), and radon (Rn).

9. The method of claim 1, wherein the positive pressure gas supplied to the kiln shell is a mixture of nitrogen and butane.

10. The method of claim 1, wherein the kiln shell is made of a metal, ceramic, or carbon.

11. The method of claim 1, wherein the electrode material contains carbon.
